# EUROPÄISCHE PATENTSCHRIFT

(11) **EP 1 018 702 B1**
(45) Veröffentlichungstag und Bekanntmachung des Hinweises auf die Patenterteilung: **14.04.2010**
(21) Anmeldenummer: 99100020.9
(22) Anmeldetag: 04.01.1999
(51) Int. Cl.: G06K 19/077, G09F 3/00

(54) **Verbundmaterialeinheiten mit transponder**
Composite material units with transponder
Unités des matériaux composites avec transpondeur

(43) Veröffentlichungstag der Anmeldung: 12.07.2000
(73) Patentinhaber: X-ident technology GmbH, 52355 Düren (DE)
(72) Erfinder: Liebler, Ralf Dr., 52372 Kreuzau (DE); Högenett, Helmut, 52385 Niedeggen (DE)
(74) Vertreter: Castell, Klaus

(56) Entgegenhaltungen:
- EP-A- 0 595 549
- WO-A-95/33246
- CH-A- 689 130
- US-A- 4 342 904

## Beschreibung

Die Erfindung betrifft Gedruckbare Verbundmaterialeinheiten nach dem Oberbegriff des Patentanspruchs 1 und ein Verfahren zum Herstellen derartige Verbundmaterialeinheiten.

Es ist bekannt, Etiketten als fernablesbare Identifizierungsanhänger für Gepäckstücke zu verwenden. Diese weisen beispielsweise ein flexibles Substrat, eine auf dem Substrat gebildete Antenne mit einem Transponder-Schaltungs-Chip sowie Klebeschichten zum Verbinden von Chip und Antenne im Bereich der Antennenanschlußpunkte und der Chipanschlußpunkte sowie zwischen dem Transponder, dem Substrat und der Schutzfolie auf. Ein solches Etikett ist in der EP 0 595 549 B1 offenbart.

Es ist bekannt, auf eine Schutzfolie zunächst einen Haftkleber aufzubringen, auf welchen anschließend der Transponder mit aufgefügtem Schaltungs-Chip aufgeklebt wird. Auf die Oberfläche des Transponders mit aufgefügtem Chip wird eine weitere Lage einer Klebemittelschicht aufgebracht und nachfolgend auf diese Klebemittelschicht sowie auf die Haftkleberschicht auf der Schutzfolie neben den Transpondern das Substrat des Etiketts aufgefügt.

Bei der Weiterverarbeitung der so hergestellten Verbundetiketten kann es zu Beschädigungen des auf der Trägerfläche des Transponders erhaben angeordneten Chips kommen, wenn dieser in einem Verarbeitungsgerät abgeschält oder zumindest aus seiner Position herausgeschoben wird. In letzterem Falle lägen die Antennen- und Chipanschlußpunkte nicht mehr übereinander, wodurch der Transponder nicht mehr funktionsfähig ist. Da die Transponder in der Regel eine geringere Flächenausdehnung als das Etikett aufweisen, ist das Verbundetikett im Bereich des Transponders dicker als an Stellen ohne RFID-Transponder. Ungleichmäßige Dicke eines Etikettes kann Verarbeitungsprobleme bereiten und kann auch das Bedrucken der Etikettenoberfläche erschweren.

Die WO 95/33 246 A beschreibt Verbundmaterialeinheiten, wobei ein Chip zwischen zwei deformierbare Substrate eingepresst wird.

Aufgabe der Erfindung ist es, Verbundmaterialeinheiten mit RFID-Transpondern zu schaffen, die sich störungsfrei verarbeiten und bedrucken lassen.

Diese Aufgabe wird gelöst durch bedruckbare Verbundmaterialeinheiten mit den Merkmalen der Patentanspruchs 1 und ein Verfahren zur Herstellung derartige Einheiten mit den Merkmalen des Anspruchs 11.

Die Dickenschwankungen bezogen auf die mittlere Materialdicke liegen unter 30%, vorzugsweise sind sie kleiner als 20%.

Die Verbundmaterialeinheiten können Etiketten, Anhänger, wie Gepäckanhänger, Identifikationsbelege, wie Fahrkarten, Identifikationskarten, Zutrittsberechtigungsbelege, wie Eintrittskarten, und dergleichen sein.

Vorzugsweise ist die Dickenausgleichsschicht eine Schaumschicht, eine geprägte Kunststoffolie, ein Faservlies oder ein Stapelfaserschicht, die aufgeflockt und mit Klebstoff verankert ist. Ganz besonders bevorzugt ist es, die Dickenausgleichsschicht als eine aufgeschäumte Kleberschicht auszubilden.

Die Dickenausgleichsschicht kann zwischen der Oberfläche des RFID-Transponders, auf der sich der Chip befindet, und dem benachbarten ersten Substrat oder der benachbarten Kleberschicht angeordnet und mit dieser haftend verbunden sein. Bei dieser Anordnung ist der Dickenausgleich des Chips am besten gewährleistet. Es ist auch möglich die Dickenausgleichsschicht zwischen der Oberfläche des RFID-Transponders, auf der sich kein Chip befindet und dem benachbarten ersten Substrat oder der benachbarten Kleberschicht azuordnen und mit dieser haftend zu verbinden. Der Dickenausgleich des Chips wird jedoch auch bei anderer Anordnung der Schichten erreicht.

Bei einer Ausführungsform der Verbundmaterialeinheiten ist die Kleberschicht eine Haftkleberschicht und das zweite Substrat auf der dem selbsthaftenden Kleber zugewandten Oberfläche mit einem Trennmittel ausgerüstet, um das zweite Substrat ablösen und die Verbundmaterialeinheit auf einen zu kennzeichnenden Gegenstand aufkleben zu können.

Als zweites Substrat sind insbesondere sogenannte Trennpapiere geeignet, deren Trennwirkung auf Oberflächenbehandlung mit Siliconen oder anderen Trennmitteln, wie Chromverbindungen bewährt.

Grundsätzlich kann die Kleberschicht auch eine Heißsiegelkleberschicht oder Schmelzkleberschicht sein. Eine solche Ausführungsform der Kleberschicht ist dann bevorzugt, wenn das zweite Substrat nicht ablösbar sein muß.

Bei einer Ausführungsform der Erfindung sind eine Vielzahl von Verbundmaterialeinheiten zu einer Bahn miteinander verbunden, und die RFID-Transponder sind in Bahnlaufrichtung in Abstand voneinander in der Bahn angeordnet. Zwischen benachbarten Verbundmaterialeinheiten können quer zur Bahnlaufrichtung angeordnete vorbereitete Trennlinien ausgebildet sein.

Bei der Ausführungsform einer Bahn mit einer Vielzahl von Verbundmaterialeinheiten kann die Bahnbreite auch größer als die Breite oder Länge der gewünschten Einheiten sein. In diesem Falle werden Einheiten in der Bahn derart vorbereitet, daß das zweite Substrat als durchgehende Bahn erhalten bleibt und Trennlinien längs und quer zur Bahnlaufrichtung ausgebildet sind. Ganz besonders bevorzugt ist es, zwischen benachbarten Einheiten quer zur Bahnlaufrichtung nicht nur eine, sondern mehrere Trennlinie, beispielsweise zwei in geringerem Abstand voneinander anzubringen. Auf diese Weise entstehen in der Bahn Verbundmaterialeinheiten, die in Bahnlaufrichtung einen Abstand voneinander aufweisen.

Die Dickenausgleichsschicht wirkt auch als Druckschutz für den Chip des RFID-Transponders, so daß das Beschädigungsrisiko der elektrischen Verbindungen des Transponders geringer ist.

Ein Schaumkleber weist den Vorteil auf, daß er elastisch verformbar ist. Wird ein Druck auf ihn ausgeübt, verformt er sich nachgiebig, so daß bei Wegfall der Druckkraft eine entsprechende Rückverformung stattfindet. Ein in eine solche Schaumkleberschicht eingebetteter Chip ist dadurch elastisch abgepolstert. Die Erhebung des Chips gegenüber der ihn umgebenden Fläche ist dadurch weniger spürbar, da aufgrund des Schaumklebers sanfte Übergänge geschaffen werden, an denen Kanten oder einzelne Teile eines Verarbeitungsgerätes weniger leicht hängenbleiben können. Die Gefahr des Abschälens des Chips von der Antenne des Transponders besteht dadurch im wesentlichen nicht mehr. Vorzugsweise weist daher die Schaumkleberschicht zumindest eine solche Dicke auf, daß die Dicke des Chips egalisiert ist. Diese Wirkung wird jedoch auch mit anderen Dickenausgleichsmaterialien erreicht.

Alternativ kann vorzugsweise der Druckschutz durch eine geprägte Folie ausgebildet sein, die auf der Oberfläche des Transponders mit dem darauf angeordneten Chip positioniert ist. Eine derart geprägte Folie ist entweder so angeordnet, daß sie von der Höhe her im wesentlichen der Höhe des Chips entspricht und im Bereich des auf die Antenne aufgebrachten Chips eine Ausnehmung oder sogar eine Öffnung mit Abmessungen aufweist, welche dem Chip entsprechen. Dadurch wird eine ebene, mit schräg ansteigenden oder abgerundeten Kanten versehene Fläche geschaffen, welche ebenfalls keine Kanten zum Angriff und Ablösen des Chips mehr beläßt.

Auf ihrer zum ersten Substrat gerichteten Oberfläche wird die geprägte Folie mit einem Klebemittel versehen, das sie mit dem ersten Substrat verbindet.

Besonders bevorzugt wird der Transponder in der Verbundmaterialeinheit so angeordnet, daß die Längserstreckung des Transponders und/oder des Chips quer zur Längserstreckung der Verbundmaterialeinheit angeordnet wird. Beim Aufrollen von Bahnen der Verbundmaterialeinheiten, welches insbesondere bei einer Verbundmaterialeinheit oder einem Verbundmaterialstreifen vorgesehen ist, wird dadurch die Gefahr des Ablösens des Transponders von der Bahn bzw. des Chips von der Oberfläche der Antenne vermindert. Aufgrund des im Vergleich zum zweiten Substrat und zum ersten Substrat einer Verbundmaterialeinheit weniger flexiblen Materials des Transponders bzw. des Chips besteht beim Aufwickeln auf einen verhältnismäßig geringen Durchmesser ansonsten die Gefahr, daß der Transponder aus vergleichsweise starrerem Material sich von dem flexiblen Material löst. Dies gilt ganz besonders für den Chip, da dieser üblicherweise aus einem nicht flexiblen Material hergestellt wird. Im Falle des Lösens des Chips von der Antenne findet eine Unterbrechung des Kontaktes zwischen den Chip- und den Antennenanschlußpunkten statt, wodurch die Funktionsfähigkeit des Transponders nicht mehr gegeben ist. Hieran wird in den meisten Fällen auch das nachfolgende Abrollen der aufgerollten Verbundmaterialeinheiten nichts ändern, da der Chip dann meist nicht wieder so auf der Antenne aufliegt, daß die Chipkontaktpunkte auf den Antennenkontaktpunkten zu liegen kommen.

Als besonders vorteilhaft erweist sich die erfindungsgemäß vorgesehene Möglichkeit, daß der Transponder selbstklebend auf dem zweiten Substrat der Verbundmaterialeinheit aufliegt. Gerade bei der Verwendung einer Schaumkleberschicht wird dann zunächst der fertig mit dem Chip bestückte Transponder auf das zweite Substrat aufgeklebt, nachfolgend auf zweites Substrat und Transponder mit Chip die Schaumkleberschicht und anschließend das erste Substrat der Verbundmaterialeinheit aufgebracht. Vorteilhaft wird hierdurch vermieden, zunächst eine Haftkleberschicht auf das zweite Substrat aufzubringen, nachfolgend die Transponder mit Chips dort aufzufügen und diese mit der Schaumkleberschicht zu versehen. Auch bei der alternativen Verwendung geprägter Folien erweist sich die Verwendung eines selbstklebenden Transponders als besonders vorteilhaft, da dieser beispielsweise vor dem Auffügen auf das zweite Substrat der Verbundmaterialeinheit mit der geprägten Folie versehen werden kann. Nach seinem Aufbringen auf das zweite Substrat der Verbundmaterialeinheit werden die Oberflächen von zweitem Substrat und Transponder mit einer entsprechenden Haftkleberschicht versehen und das erste Substrat der Verbundmaterialeinheit aufgefügt.

Vorzugsweise weist der RFID-Transponder eine Folienschicht auf, auf welcher eine Antenne und der Chip angeordnet sind, und die auf der von dem Chip abgewandten Fläche mit einem Klebemittel beschichtet oder kaschiert ist. Besonders bevorzugt ist als Klebemittel ein Transfer- oder Haftkleber oder ein aufgedruckter Kleber. Bevorzugt sind mehrere Transponder auf einer Folienbahn hintereinander angeordnet und durch Stege oder Transportführungen voneinander getrennt. Alternativ hierzu können sie aber auch einzeln ausgestanzt und mit einer entsprechenden Schutzschicht auf der Klebemittelschicht versehen sein. Das Vorsehen der einzelnen Transponder auf einer Folienbahn erweist sich als vorteilhaft, um im maschinellen kontinuierlichen Betrieb die Transponder von der Folienbahn zu lösen und sie nachfolgend auf das zweite Substrat der Verbundmaterialeinheit aufzufügen.

Zur näheren Erläuterung der Erfindung werden im folgenden Ausführungsbeispiele anhand der Zeichnungen näher beschrieben. Diese zeigen in:
- Fig. 1: eine Seitenansicht einer Zusammenbauskizze bei der Verwendung einer Dickenausgleichsschicht,
- Fig. 2: eine perspektivische Ansicht eines mit RFID-Transponder versehenen Verbundmaterialeinheit, das als Transportgutanhänger ausgebildet ist.
- Fig. 3: eine perspektivische Ansicht einer zweiten Ausführungsform einer Verbundmaterialeinheit mit Transponder und geprägter Folie als Druckschutz.

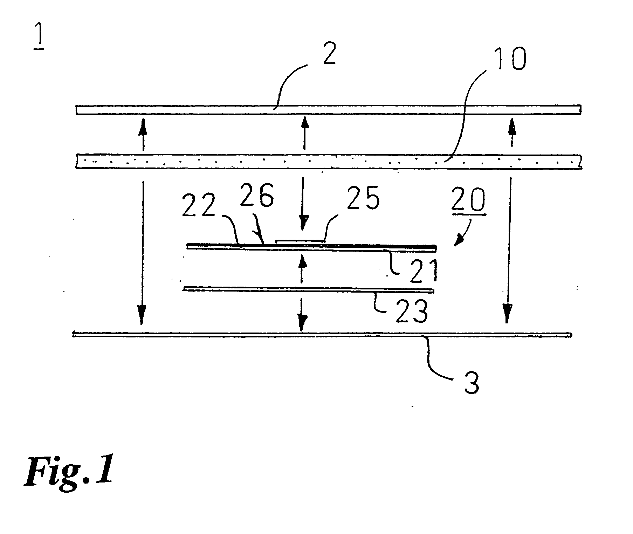

Fig. 1 zeigt eine seitliche Explosionsansicht einer ersten Ausführungsform einer Verbundmaterialeinheit 1 mit erfindungsgemäßer Dickenausgleichsschicht. Diese ist beispielsweise eine Schaumkleberschicht 10. Der Dickenausgleich in Form der Schaumkleberschicht 10 wird auf ein erstes Substrat 2 der Verbundmaterialeinheit 1 aufgetragen. Dies ist durch die Pfeile in Fig. 1 angedeutet.

Die Schaumkleberschicht 10 dient dem Schützen eines Transponders 20 gegen Beschädigung. Der Transponder 20 weist vorzugsweise eine Folienschicht 21, eine darauf aufgedruckte oder aufgebrachte Antenne 22 sowie einem Chip 25 auf. Der Chip 25 dient dem Ansteuern der Antenne und enthält einen entsprechenden Schaltungsaufbau.

Der Transponder 20 wird auf seiner dem Chip abgewandten Oberfläche mit einer Klebemittelschicht 23 versehen.

Die Verbundmaterialeinheit 1 weist weiterhin ein zweites Substrat 3 auf. Auf dieses Substrat 3 kann der Transponder 20 mit seiner Klebemittelschicht 23 aufgeklebt werden. Anschließend wird das erste Substrat 2 der Verbundmaterialeinheit mit der Schaumkleberschicht 10 zusammen auf das zweite Substrat 3 der Verbundmaterialeinheit 1 sowie die Oberfläche 26 des Transponders 20 mit Chip 25 aufgeklebt.

Dadurch wird der Transponder mit Chip druckfest in die Dickenausgleichsschicht 10 eingebettet, wodurch bei der weiteren Verwendung der Verbundmaterialeinheit 1 mit Transponder und Chip nicht mehr die Gefahr besteht, daß der Chip beschädigt oder auf der Oberfläche der Antenne 22 verschoben wird, wodurch die Funktionsfähigkeit des Transponders nicht mehr gegeben wäre. Beispielsweise wird damit vermieden, daß Gepäckstücke trotz Verwendung von Verbundmaterialeinheit als Etiketten mit Transpondern nicht an dem gewünschten Ziel ankommen, da der Chip nicht mehr ausgelesen werden konnte. Das Vorsehen der erfindungsgemäßen Dickenausgleichsschicht trägt damit vorteilhaft zur Sicherheit von Transportgut bei, wenn die Verbundmaterialeinheit als Etikett oder Anhänger für Transportgut verwendet wird.

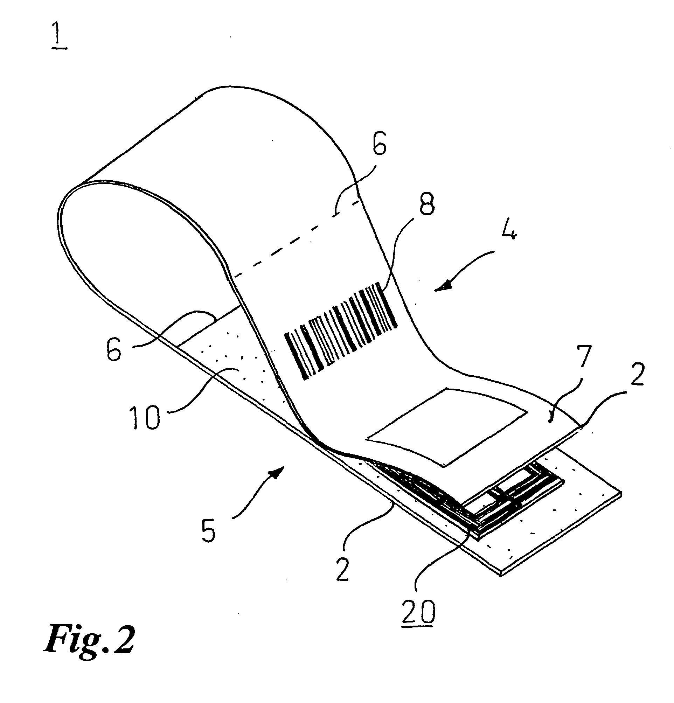

In Fig. 2 ist eine perspektivische Ansicht einer Verbundmaterialeinheit 1, die als Transportgutanhänger ausgebildet ist, im fast zusammengefalteten Zustand dargestellt. Von der Verbundmaterialeinheit ist bereits das zweite Substrat 3 teilweise abgezogen, weswegen die Dickenausgleichsschicht 10, welche auf der gesamten Oberfläche des ersten Substrates 2 der Verbundmaterialeinheit 1 aufgetragen ist, zum Aufeinanderkleben der Enden 4, 5 der Einheit bis zu den Linien 6 geeignet ist. Der gebogene Bereich zwischen den beiden Linien 6 ist ohne Klebeschicht vorgesehen, da dieser Bereich um Handgriffe von Gepäckstücken oder ähnliches herumgeführt werden soll.

Wie üblich kann das erste Substrat 2 der Verbundmaterialeinheit 1 auf der Oberfläche 7 bedruckt sein oder werden, wie dies durch einen Barcode 8 angedeutet ist.

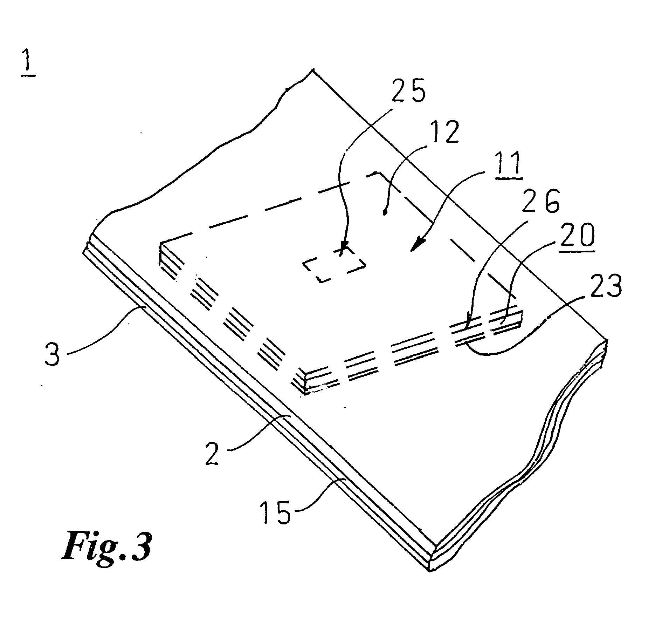

In Fig. 3 ist eine perspektivische Ansicht einer zweiten Ausführungsform eines erfindungsgemäß ausgerüsteten Verbundmaterialeinheit als Detailausschnitt dargestellt. Hierbei ist die Einheit bereits hinsichtlich seiner einzelnen Schichten aufeinandergefügt. Anstelle des in Fig. 1 beispielhaft verwendeten Schaumklebers ist hierbei eine geprägte Folie 11 als Dickenausgleichsschicht vorgesehen, welche den Chip 25 umschließt. Die Folie weist vorzugsweise gerade eine solche Höhe auf, daß die Höhe des Chips ausgeglichen bzw. egalisiert wird. Die geprägte Folie ist im wesentlichen flächig mit einer Öffnung oder Ausnehmung an der Stelle, an welcher der Chip auf dem Transponder bzw. der Antenne positioniert ist. Besonders bevorzugt entsprechen die Außenabmessungen der geprägten Folie 11 denen des Transponders.

Auf die Oberfläche 12 der geprägten Folie 11 sowie auf den Chip 25 bzw. dessen Oberfläche ist eine Haftkleberschicht 15 aufgebracht, welche insbesondere zuvor auf das erste Substrat 2 der Verbundmaterialeinheit 1 aufgetragen wurde. Im Bereich des Transponders weist die gesamte Einheit 1 eine sehr geringe Verdickung auf, jedoch ist der Chip 25 hinsichtlich seiner Positionierung geschützt und ortsfest gesichert.

Anstelle der Haftkleberschicht 15 kann zusätzlich zu der geprägten Folie auch eine Schaumkleberschicht 10 vorgesehen werden, um den Transponder gesamtheitlich in der Verbundmaterialeinheit druckfest zu sichern. Darüber hinaus kann auch anstelle der geprägten Folie das Substrat 2 selbst eine Ausnehmung zum Einfügen des Chips 25 und/oder zum Einfügen des gesamten Transponders aufweisen.

Als besonders vorteilhaft erweist es sich, den Transponder mit dem aufgefügten Chip quer zur Längserstreckung der Verbundmaterialeinheit zu plazieren, da beim nachfolgenden Aufrollen einer Bahn mit einer Mehrzahl von Verbundmaterialeinheiten ansonsten die Gefahr besteht, daß die Transponder durch die starke Krümmung beim Aufrollen der Bahn von dieser gelöst werden, oder zumindest für die Chips die Gefahr besteht, daß diese von der Oberfläche der Antenne des Transponders gelöst werden, wodurch die Funktionsfähigkeit des Transponders ebenfalls nicht mehr gegeben ist.

### Bezugszeichenliste

- 1: Verbundmaterialeinheit
- 2: erstes Substrat, bedruckbare Oberschicht
- 3: zweites Substrat
- 4: Ende
- 5: Ende
- 6: Linie
- 7: Oberfläche
- 8: Barcode

- 10: Dickenausgleichsschicht
- 11: geprägte Folie
- 12: Oberfläche
- 15: Haftkleberschicht

- 20: Transponder
- 21: Folienschicht
- 22: Antenne
- 23: Klebemittelschicht
- 24: zweites Substrat
- 25: Chip
- 26: Oberfläche

## Patentansprüche

1. Bedruckbare Verbundmaterialeinheiten- oder Verbundmaterialstreifen-Bahn (1) mit einem ersten bedruckbare flexiblen Substrat (2), einer Kleberschicht (23), deren dem ersten Substrat (2) abgewandte Oberfläche mit einem zweiten flexiblen Substrat (3) abgedeckt ist und einem zwischen dem ersten Substrat (2) und dem zweiten Substrat (3) angeordneten RFID-Transponder (21) mit Chip (25), wobei die Flächenausdehnung des RFID-Transponders (21) geringer ist als die der Verbundmaterialeinheiten (1), **dadurch gekennzeichnet, daß** eine senkrecht zur Fläche der Verbundmaterialeinheiten- oder Verbundmaterialstreifen-Bahn (1) elastisch deformierbare Dickenausgleichsschicht (10) auf dem RFID-Transponder zum Vergleichmäßigen der Dicke der Verbundmaterialeinheiten- oder Verbundmaterialstreifen-Bahn vorgesehen ist, wobei die Dickenschwankungen der Verbundmaterialeinheiten- oder Verbundmaterialstreifen-Bahn (1) bezogen auf deren mittlere Materialdicke unter 30% liegen.

2. Verbundmaterialeinheiten- oder Verbundmaterialstreifen-Bahn (1) nach Anspruch 1,
**dadurch gekennzeichnet,**
**daß** die Dickenausgleichsschicht (10) eine Schaumschicht, eine geprägte Kunststoffolle, ein Faservlies oder eine Stapelfaserschicht, die mindestens so dick wie die maximale Dicke des RFID-Transponders (21) mit Chip (25) ist.

3. Verbundmaterlalelnhelten- oder Verbundmaterialstreifen-Bahn (1) nach Anspruch 1 oder 2,
**dadurch gekennzeichnet,**
**daß** die Dickenausgleichsschicht (10) eine Schaumkleberschicht ist.

4. Verbundmaterialeinheiten- oder Verbundmaterialstreifen-Bahn (1) nach einem der vorstehenden Ansprüche 1 bis 3,
**dadurch gekennzeichnet,**
**daß** der RFID-Transponder (20) eine auf einer Trägerfolie (21) angeordnete Antenne (22) und einen damit elektrisch leitend verbundenen, auf der Trägerfolie (21) befestigten Chip (25) aufweist.

5. Verbundmaterialeinheiten- oder Verbundmaterialstreifen-Bahn (1) nach einem der Ansprüche 1-4,
**dadurch gekennzeichnet,**
**daß** die Dickenausgleichsschicht (10) zwischen der Oberfläche des RFID-Transponders (21), auf der sich der Chip (25) befindet, und dem benachbarten ersten Substrat (2) oder der benachbarten Kleberschicht (23) angeordnet und mit dieser haftend verbunden ist.

6. Verbundmaterialeinheiten- oder Verbundmaterialstreifen-Bahn (1) nach einem der Ansprüche 1-4,
**dadurch gekennzeichnet,**
**daß** die Dickenausgleichsschicht (10) zwischen der Oberfläche des RFID-Transponders (21), auf der sich kein Chip (25) befindet, und dem benachbarten ersten Substrat (2) oder der benachbarten Kleberschicht (23) angeordnet und mit dieser haftend verbunden ist.

7. Verbundmaterialeinheiten- oder Verbundmaterialstreifen-Bahn (1) nach einem der vorstehenden Ansprüche,
**dadurch gekennzeichnet,**
**daß** die Kleberschicht (23) eine Haftklesberschicht und die der Haftkleberschicht zugewandte Oberfläche des zweiten Substrats (3) mit Trennmittel ausgerüstet ist, so daß das zweite Substrat (3) von der Kleberschicht (23) ablösbar ist.

8. Verbundmaterialeinheiten- oder Verbundmaterialstreifen-Bahn (1) nach einem der vorstehenden Ansprüche,
**dadurch gekennzeichnet,**
**daß** die Verbundmaterialeinheiten oder Verbundmaterialstreifen eine rechteckige Form aufweisen und als Etikett, Anhänger, Identifikationsbeleg, Zutrittsberechtigungsbeleg ausgebildet sind.

9. Verbundmaterialeinheiten- oder Verbundmaterialstreifen-Bahn (1) nach einem der vorstehenden Ansprüche,
**dadurch gekennzeichnet**,
der Chip (25) und/oder der Transponder (20) in den Verbundmaterialeinheiten (1) oder Verbundmaterialstreifen so angeordnet ist (sind), daß seine (ihre) Längserstreckung(en) quer zur Längserstreckung der Verbundmaterialeinheiten (1) oder Verbundmaterialstreifen verlaufen.

10. Verbundmaterialeinheiten- oder Verbundmaterialstreifen-Bahn (1) nach einem der vorstehenden Ansprüche,
**dadurch gekennzeichnet,**
**daß** eine Vielzahl von Verbundmaterialeinheiten (1) zu einer Bahn miteinander verbunden sind und die RFID-Transponder (21) in Bahnlaufrichtung in Abstand voneinander in der Bahn angeordnet sind.

11. Verfahren zum Herstellen von Verbundmaterialeinhelten- oder Verbundmaterialstreifen-Bahnen mit einem ersten und einem zweiten Substrat (2,3) nach einem der Ansprüche 1 bis 10,
**dadurch gekennzeichnet, daß**
- RFID-Transponder (21) mit Folienschicht mit einer Antenne und einem Chip (25) auf einer Folienbahn vorgesehen werden,
- die Follenschicht auf der von dem Chip (25) abgewandten Fläche mit einem Klebemittel beschichtet oder kaschiert wird,
- die RFID-Transponder (21) von der Folienbahn maschinell kontinuierlich gelöst und auf das zweite Substrat (3) der Verbundmaterialeinheiten- oder Verbundmaterialstreifen-Bahn aufgefügt werden,
- das erste Substrat (2) mit einer elastisch deformierbaren Dickenausgleichsschicht (10) versehen und auf das zweite mit Transpondern (21) versehene Substrat (3) aufgebracht wird.

## Claims

1. Printable composite material units web or composite material strips web (1) with a first printable flexible substrate (2), an adhesive layer (23), whose surface facing away from the first substrate (2) is covered with a second flexible substrate (3), and an RFID transponder (21) with chip (25) arranged between the first substrate (2) and the second substrate (3), wherein the surface area of the RFID transponder (21) is less than that of the composite material units (1), ***characterised in that*** a thickness compensation layer (10), elastically deformable at right angles to the surface of the composite material units web or composite material strips web (1), is provided on the RFID transponder to even out the thickness of the composite material units web or composite material strips web, wherein the fluctuations in thickness of the composite material units web or composite material strips web (1) are less than 30% with reference to their average material thickness.

2. The composite material units web or composite material strips web (1) according to Claim 1, ***characterised in that*** the thickness compensation layer (10) is a foam layer, an impressed plastic layer, a fibrous non-woven fabric, or a staple fibre layer, which is at least as thick as the maximum thickness of the RFID transponder (21) with chip (25).

3. The composite material units web or composite material strips web (1) according to Claim 1 or 2, ***characterised in that*** the thickness compensation layer (10) is a foam adhesive layer.

4. The composite material units web or composite material strips web (1) according to one of the above Claims 1 to 3, ***characterised in that*** the RFID transponder (20) has an antenna (22) arranged on a carrier film (21), and a chip (25) connected to the antenna in an electrically conducting manner and attached to the carrier film (21).

5. The composite material units web or composite material strips web (1) according to one of the Claims 1-4, ***characterised in that*** the thickness compensation layer (10) is arranged between the transverse surface of the RFID transponder (21), on which the chip (25) is located, and the adjacent first substrate (2) or the adjacent adhesive layer (23), and is adhesively connected with the former.

6. The composite material units web or composite material strips web (1) according to one of the Claims 1-4, ***characterised in that*** the thickness compensation layer (10) is arranged between the surface of the RFID transponder (21), on which no chip (25) is located, and the adjacent first substrate (2) or the adjacent adhesive layer (23), and is adhesively connected with the former.

7. The composite material units web or composite material strips web (1) according to one of the above Claims, ***characterised in that*** the adhesive layer (23) is fitted with a contact adhesive layer, and the surface of the second substrate (3) facing towards the contact adhesive layer is fitted with a means of separation such that the second substrate (3) can be released from the adhesive layer (23).

8. The composite material units web or composite material strips web (1) according to one of the above Claims, ***characterised in that*** the composite material units or composite material strips have a rectangular shape and are designed as labels, tags, identification passes, or access authorisation passes.

9. The composite material units web or composite material strips web (1) according to one of the above Claims, ***characterised in that*** the chip (25) and/or the transponder (20) is/are arranged in the composite material units (1) or composite material strips such that its/their lengthwise extent(s) run transverse to the lengthwise extent of the composite material units (1) or composite material strips.

10. The composite material units web or composite material strips web (1) according to one of the above Claims, ***characterised in that*** a multiplicity of composite material units (1) are connected with one another to form a web, and the RFID transponders are arranged in the web with a separation distance from one another in the direction of travel of the web.

11. A method for the manufacture of composite material units web or composite material strips web with a first and a second substrate (2, 3) according to one of the Claims 1 to 10, ***characterised in that**:*
- RFID transponders (21) with a film layer with an antenna and a chip (25) are provided on a film web,
- the film web is coated or laminated with an adhesive means on the surface facing away from the chip (25),
- the RFID transponders (21) are continuously released from the film web by machine, and are fitted onto the second substrate (3) of the composite material units web or composite material strips web,
- the first substrate (2) is provided with an elastically deformable thickness compensation layer (10) and is applied onto the second substrate (3) that is provided with transponders (21).

## Revendications

1. Bande imprimable formée d'unités de matériau composite ou de rubans de matériau composite (1), comportant un premier substrat souple imprimable (2), une couche collante (23), dont la surface détournée du premier substrat (2) est recouverte par un deuxième substrat souple (3), et un transpondeur RFID (21) à puce (25) disposé entre le premier substrat (2) et le deuxième substrat (3), l'extension surfacique du transpondeur RFID (21) étant plus faible que celle des unités de matériau composite (1), ***caractérisée en ce qu'**il* est prévu une couche de compensation d'épaisseur (10) élastiquement déformable perpendiculairement à la surface de la bande d'unités de matériau composite ou de rubans de matériau composite (1) sur le transpondeur RFID pour égaliser l'épaisseur de la bande d'unités de matériau composite ou de rubans de matériau composite, les variations d'épaisseur de la bande d'unités de matériau composite ou de rubans de matériau composite (1) par rapport à son épaisseur de matériau moyenne étant inférieures à 30 %.

2. Bande d'unités de matériau composite ou de rubans de matériau composite (1) selon la revendication 1, ***caractérisée en ce que*** la couche de compensation d'épaisseur (10) est une couche de mousse, un film de plastique gaufré, un non-tissé fibreux ou une couche de fibres discontinues qui est au moins aussi épaisse que l'épaisseur maximale du transpondeur RFID (21) avec la puce (25).

3. Bande d'unités de matériau composite ou de rubans de matériau composite (1) selon la revendication 1 ou 2, ***caractérisée en ce que*** la couche de compensation d'épaisseur (10) est une couche de colle mousseuse.

4. Bande d'unités de matériau composite ou de rubans de matériau composite (1) selon une des revendications 1 à 3 précédentes, ***caractérisée en ce que*** le transpondeur RFID (20) présente une antenne (22) disposée sur un film porteur (21) et une puce (25) qui lui y est reliée avec conduction électrique et qui est fixée sur le film porteur (21).

5. Bande d'unités de matériau composite ou de rubans de matériau composite (1) selon une des revendications 1 à 4, ***caractérisée en ce que*** la couche de compensation d'épaisseur (10) est disposée entre la surface du transpondeur RFID (21) sur laquelle se trouve la puce (25) et le premier substrat voisin (2) ou la couche collante voisine (23) et est reliée à celle-ci par adhérence.

6. Bande d'unités de matériau composite ou de rubans de matériau composite (1) selon une des revendications 1 à 4, ***caractérisée en ce que*** la couche de compensation d'épaisseur (10) est disposée entre la surface du transpondeur RFID (21) sur laquelle ne se trouve aucune puce (25) et le premier substrat voisin (2) ou la couche collante voisine (23) et est reliée à celle-ci par adhérence.

7. Bande d'unités de matériau composite ou de rubans de matériau composite (1) selon une des revendications précédentes, ***caractérisée en ce que*** la couche collante (23) est une couche de colle de contact et que la surface tournée vers la couche de colle de contact du deuxième substrat (3) est équipée de moyens de séparation, de sorte que le deuxième substrat (3) peut être détaché de la couche collante (23).

8. Bande d'unités de matériau composite ou de rubans de matériau composite (1) selon une des revendications précédentes, ***caractérisée en ce que*** les unités de matériau composite ou rubans de matériau composite ont une forme rectangulaire et se présentent sous forme d'étiquettes, éléments accrochés, documents d'identification, documents d'autorisation d'accès.

9. Bande d'unités de matériau composite ou de rubans de matériau composite (1) selon une des revendications précédentes, ***caractérisée en ce que*** la puce (25) et/ou le transpondeur (20) est(sont) disposé(s) dans les unités de matériau composite (1) ou les rubans de matériau composite de manière à ce que son(leur) extension longitudinale s'étende transversalement à l'extension longitudinale des unités de matériau composite (1) ou rubans de matériau composite.

10. Bande d'unités de matériau composite ou de rubans de matériau composite (1) selon une des revendications précédentes, ***caractérisée en ce que*** une multitude d'unités de matériau composite (1) sont reliées ensemble pour former une bande et que les transpondeurs RFID (21) sont disposés dans la bande espacés les uns des autres dans le sens de circulation de la bande.

11. Procédé de fabrication de bandes d'unités de matériau composite ou de rubans de matériau composite comportant un premier et un deuxième substrat (2, 3) selon une des revendications 1 à 10, ***caractérisée en ce que***
- des transpondeurs RFID (21) dotés d'une couche de film avec antenne et puce (25) sont placés sur une bande de film,
- la couche de film est appliquée ou plaquée avec un moyen collant sur la surface détournée de la puce (25),
- les transpondeurs RFID (21) sont détachés mécaniquement en continu de la bande de film et sont ajoutés sur le deuxième substrat (3) de la bande d'unités de matériau composite ou de rubans de matériau composite,
- le premier substrat (2) est pourvu d'une couche de compensation d'épaisseur (10) élastiquement déformable et est appliqué sur le deuxième substrat (3) pourvu de transpondeurs (21).
